# EUROPÄISCHE PATENTSCHRIFT

(11) **EP 1 580 092 B1**
(45) Veröffentlichungstag und Bekanntmachung des Hinweises auf die Patenterteilung: **23.09.2015**
(21) Anmeldenummer: 05100746.6
(22) Anmeldetag: 03.02.2005
(51) Int. Cl.: B60S 1/08

(54) **Kamera in einem Kraftfahrzeug**
Camera in a vehicle
Caméra pour un véhicule automobile

(30) Priorität: 26.03.2004 DE 102004015040
(43) Veröffentlichungstag der Anmeldung: 28.09.2005
(73) Patentinhaber: ROBERT BOSCH GMBH, 70442 Stuttgart (DE)
(72) Erfinder: Haug, Karsten, 70372 Stuttgart (DE)

(56) Entgegenhaltungen:
- EP-A- 1 507 138
- WO-A-2004/007255
- PATENT ABSTRACTS OF JAPAN Bd. 2000, Nr. 23, 10. Februar 2001 (2001-02-10) & JP 2001 153969 A (NIPPON SEIKI CO LTD), 8. Juni 2001 (2001-06-08)

## Beschreibung

### Stand der Technik

Die Erfindung betrifft eine Kamera in einem Kraftfahrzeug mit wenigstens einem Bildsensor.

Kraftfahrzeughersteller planen, Kraftfahrzeuge mit Kameras auszustatten, um dem Fahrer Fahrerassistenzfunktionen, wie Nachsichtunterstützung, Spurverlassenswarnung und/oder Verkehrszeichenerkennung und/oder Rückfahrhilfe, zur Verfügung zu stellen. Diese Fahrerassistenzfunktionen sind dabei Primärfunktionen der Kameras. Kameras für diese Funktionen beobachten das Kraftfahrzeugumfeld, insbesondere das Kraftfahrzeugvorfeld, und weisen daher einen Tiefenschärfebereich zwischen ca. 2 m und unendlich auf. Beispielsweise wird in der DE 40 32 927 A1 ein Nachtsichtsystem mit einer Kamera vorgeschlagen. Die Kameras werden bevorzugt in der Nähe des Innenspiegels derart angebracht, dass sich der Schnitt des Sichtfeldes der Kamera mit der Windschutzscheibe im Wischerfeld des Scheibenwischers befindet.

Ferner ist bekannt, Kraftfahrzeuge mit sogenannten Regensensoren auszurüsten, die vorhandenen Niederschlag auf einer Scheibe erfassen und in Abhängigkeit der Niederschlagsmenge ein zugeordnetes Scheibenwischersystem beeinflussen. Der Vorteil ist dabei, dass sich der Fahrer des Kraftfahrzeuges auf den Straßenverkehr konzentrieren kann, während die Einstellung des Scheibenwischers automatisiert durchgeführt wird.

Aus der deutschen Offenlegungsschrift DE 197 49 331 A1 ist beispielsweise ein Verfahren und eine Kamera zum Detektieren von auf einer Windschutzscheibe eines Kraftfahrzeuges befindlichen Objekten, wie Wassertropfen oder sonstigen Verschmutzungsobjekten, bekannt. Die Kamera ist auf die Außenseite der Windschutzscheibe fokussiert.

Die europäische Patentanmeldung EP 0 832 798 A2 schlägt ein Bilderkennungssystem zur Detektion von Wassertropfen auf einer Windschutzscheibe eines Kraftfahrzeuges vor, wobei eine Mattscheibe auf die Windschutzscheibe aufgebracht ist, so dass Objekte in größerer Entfernung von der Windschutzscheibe nicht scharf abgebildet werden.

In der internationalen Veröffentlichung WO 03/002388 A2 wird vorgeschlagen, die äußere Oberfläche einer Scheibe aus zwei verschiedenen Richtungen zu beobachtet, wobei die Kameras auf die Windschutzscheibe fokussiert sind.

Aus der deutschen Offenlegungsschrift DE 197 04 818 A1 ist ein Sensorsystem mit einem optoelektrischen Wandlerelement bekannt, das optische Strahlung von einer ersten und einer zweiten Umgebung des Sensorsystems erfasst, wobei das Sensorsystem so ausgestaltet ist, dass es sich um eine Kombination aus einem Beleuchtungs- und einem Wischsensor handelt.

Die WO 2004/007255 offenbart eine Vorrichtung zur Erkennung von Regen mit einer Kamera und einem bifokalen Objektiv, wobei die Kamera zur Beobachtung einer Oberfläche einer Scheibe ausgebildet ist.

Das Dokument EP1507138 bildet Stand der Technik nach Art. 54(3) EPÜ und offenbart eine Vorrichtung zur Erkennung von Regen mit einer Kamera gemäss dem Oberbegriff des Anspruchs 1.

### Vorteile der Erfindung

Die nachfolgend beschriebene Kamera in einem Kraftfahrzeug mit den Merkmalen des unabhängigen Patentanspruchs hat den Vorteil, dass durch die gleichzeitige Erfassung von erster optischer Strahlung des Verkehrsraumes der Umgebung des Kraftfahrzeuges durch den Großteil der lichtempfindlichen Fläche des Bildsensors und zweiter optischer Strahlung nur durch einen kleinen Teil des Bildsensors die Kamera wenigstens eine Primärfunktion, wie Nachsichtunterstützung (Night-Vision) und/oder Spurverlassenswarnung und/oder Verkehrszeichenerkennung und/oder Rückfahrhilfe, zur Verfügung stellt und gleichzeitig die Kamera die Funktion eines Regensensors realisiert. Der Teil des Bildsensors, der die zweite optische Strahlung erfasst, umfasst gleich oder weniger als 10%, vorzugsweise gleich oder weniger als 2%, der lichtempfindlichen Fläche des Bildsensors. Dies hat ferner den Vorteil, dass die Konkurrenzsituation um den knappen Einbauraum an der Windschutzscheibe, beispielsweise in der Nähe des Innenspiegels, entfällt, die dadurch entsteht, da Regensensoren für das automatische Aktivieren der Scheibenwischer an ähnlicher Stelle wie Kameras (Videosensoren) platziert sind. Ferner wird auch die Konkurrenzsituation um den knappen Wischraum entschärft. Durch die integrierte Regensensorfunktion in der Kamera werden in vorteilhafter Weise die Kosten für den Regensensor reduziert, da ein separater Regensensor entfallen kann. Dies wirkt sich günstig auf die Gesamtkosten für Kamera und Regensensor aus. Ferner hat diese Integration den Vorteil, dass die Rechenleistung und die Schnittstellen der Kamera für die Primärfunktionen als auch für die integrierte Regensensorfunktion verwendet werden. Als Recheneinheit für die Regensensorfunktion ist der leistungsfähige Rechner der Kamera mitbenutzbar. Daher wird für die Regensensorfunktion ein separater Mikrocontroller und ein Interface zum Kraftfahrzeug, beispielsweise zum CAN-Bus, eingespart. Damit entsteht ein weiterer Vorteil hinsichtlich der Kosten der Kamera im Vergleich zu einem zusätzlichen Regensensor. Zusammenfassend ergeben sich Vorteile aus Kosten- und Platzgründen. Weiterhin ist vorteilhaft, dass die Regeninformation der Primärfunktion zur Verfügung steht, die daraus wiederum Schlüsse auf die Sichtweite oder die Zuverlässigkeit ihrer Ergebnisse ableiten kann. Vorteilhaft ist ferner, dass für die Regensensorfunktion viele fotosensitive Elemente (Pixel) genutzt werden, beispielsweise durch die Nutzung von 10 Zeilen a 640 Pixel gegenüber wenigen, beispielsweise vier, Fotodioden und/oder Fototransistoren bei konventionellen Regensensoren. Dies führt zu einer hohen Redundanz und Robustheit bei der Realisierung eines Regensensors durch eine Kamera entsprechend den Merkmalen des unabhängigen Patentanspruchs.

Ein weiterer Vorteil der nachfolgend beschriebenen Kamera ist, dass die Kamera über wenigstens eine Linse des Objektivs auf die Ferne fokussiert ist und damit die Kamera die Primärfunktionen zur Verfügung stellt. Die Windschutzscheibe befindet sich nicht im Schärfentiefenbereich der Kamera, wird also nicht scharf auf den Bildsensor (Imager) abgebildet. Erfindungsgemäss ist es vorgesehen, dass die Kamera derart gestaltet ist, dass von der ersten optischen Strahlung für die Primärfunktion verschiedene, zweite optische Strahlung für die Regensensorfunktionalität lediglich einem anderen Teil des Bildsensors zugeführt wird, wobei in Abhängigkeit der zweiten optischen Strahlung die Feuchtigkeit oder die Benetzung mit Wassertropfen einer externen Oberfläche einer Scheibe des Kraftfahrzeuges bestimmbar ist. Besonders vorteilhaft ist ein erstes optisches Element, das die zweite optische Strahlung begrenzt nur einem Teil des Bildsensors zuführt. Vorteilhaft ist, dass das erste optische Element die zweite optische Strahlung kollimiert, also in eine im wesentlichen parallele optische Strahlung umwandelt, da dann die optische Strahlung über das auf die Ferne fokussierte Objektiv scharf auf dem Teil des Bildsensors abgebildet wird. Ferner ist vorteilhaft, wenn das erste optische Element die zweite optische Strahlung umlenkt, da dann zweite optische Strahlung außerhalb des durch das Objektiv und den Bildsensor gebildeten Erfassungsbereichs der Kamera erfassbar ist. Vorteilhaft ist dies insbesondere auch bei der Realisierung der passiven Regensensorfunktion ohne aktive Beleuchtung durch eine Strahlungsquelle, da hierbei ein großes Messfeld für die zweite optische Strahlung vorliegt. Die Realisierung einer passiven Regensensorfunktion hat insgesamt den Vorteil eines einfachen Aufbaus, einer einfachen Justage und damit einer kostengünstigen Kamera.

Gemäss einer nicht beanspruchten Variante ist ein Hohlspiegel, insbesondere ein Parabolspiegel als erstes optisches Element vorgesehen, da Hohlspiegel gleichzeitig optische Strahlung sowohl kollimieren als auch umlenken. Dies ermöglicht die scharfe Abbildung der externen Oberfläche einer Scheibe eines Kraftfahrzeuges über das auf die Ferne fokussierte Objektiv auf den Bildsensor, wobei sich die externe Oberfläche vorzugsweise außerhalb des durch das Objektiv und den Bildsensor gebildeten Erfassungsbereich der Kamera befmdet, ohne dass eine aktive Strahlungsquelle notwendig ist.

Zur Realisierung der aktiven Regensensorfunktion ist erfindungsgemäss vorgesehen, dass das erste optische Element ein Auskoppelelement ist, das beispielsweise mittels optisch durchlässigem Kleber an der inneren Oberfläche einer Scheibe des Kraftfahrzeuges befestigt ist und die zweite optische Strahlung aus der Scheibe des Kraftfahrzeugs auskoppelt.

Ein weiterer Vorteil wird sowohl bei der Realisierung der passiven als auch der aktiven Regensensorfunktion dadurch erreicht, dass neben ersten optischen Element, dem Auskoppelelement, wenigstens ein weiteres erstes optisches Element zur Umlenkung der zweiten optischen Strahlung verwendet wird. Dies ist beispielsweise wenigstens ein optischer Spiegel und/oder wenigstens ein Prisma und/oder wenigstens ein optisches Gitter und/oder wenigstens ein Lichtwellenleiter. Entsprechendes gilt alternativ oder zusätzlich für das zweite optische Element, das Einkoppelelement. Ferner ist vorteilhaft, wenn das wenigstens eine erste optische Element, beispielsweise das Auskoppelelement, und das wenigsten eine zweite optische Element, beispielsweise das Einkoppelelement, als Strahlenleitkörper eine Einheit bilden, da dies zu einer besonders kompakten Bauform der Kamera führt.

Zur Bereitstellung der zweiten optischen Strahlung bei der Realisierung der aktiven Regensensorfunktion wird in besonders vorteilhafter Weise wenigstens eine Strahlungsquelle genutzt, wobei die zweite optische Strahlung kollimiert ist oder nach Erzeugung kollimiert wird. Die kollimierte Strahlung führt dazu, dass eine scharfe Abbildung auf den auf die Ferne fokussierten Bildsensor erreicht wird obwohl sich weder die Strahlungsquelle noch die Windschutzscheibe im Schärfentiefenbereich der Kamera befmden. Vorteilhaft ist eine geringe Strahldivergenz der zweiten optischen Strahlung, da trotz des Strahlverlaufs über einige Zentimeter dann nur kleine Bereiche des Bildsensors für die Regensensorfunktion benötigt werden und damit für die Primärfunktion eine große aktive Bildfläche verbleibt. Ferner ist vorteilhaft, dass sowohl sichtbares als auch infrarotes Licht als zweite optische Strahlung einsetzbar ist. Bei infrarotem Licht ist vorteilhaft, dass in dem von der Kamera (Videosensor) genutzten Windschutzscheibenbereich bereits die Wärmeschutzfolie ausgespart ist, wenn die Kamera für die Funktion Nachtsichtunterstützung (Night-Vision), speziell für die Funktion Night-Vision im nahen infraroten Spektralbereich (NIR-Night-Vision) benutzt wird. Eine weitere Aussparung der Wärmeschutzfolie für den Regensensor kann daher entfallen. Der Einsatz von sichtbarem Licht ist dann sinnvoll, wenn keine Aussparung der Wärmeschutzfolie vorgesehen ist oder die Dämpfung der Scheibe im Infraroten sehr hoch ist, beispielsweise wenn als Primärfunktion lediglich die Spurverlassenswarnung (Lane-Departure-Warning) vorgesehen ist. Durch die kollimierte Strahlung geringer Divergenz wird auch in vorteilhafter Weise erreicht, dass bei Abwesenheit von Wassertropfen kein Licht der Regensensorfunktion in Pixelbereiche der Primärfunktion gelangt. Ist Wasser vorhanden, dann kann die optische Strahlung der Strahlungsquelle der Regensensorfunktion durch Streuung an den Regentropfen in Pixelbereiche der Primärfunktion gelangen, wird aber nicht scharf abgebildet, da es nach Streuung am Regentropfen nicht mehr kollimiert ist und deshalb nicht stört. Bei einer Primärfunktion, die nur im Sichtbaren, wie die Spurverlassenswarnungsfunktion, nur im Infraroten, wie die Nachtsichtunterstützungsfunktion, oder nur in anderen spektralen Teilbereichen des spektralen Empfindlichkeitsbereichs des Bildsensors arbeitet, kann der Arbeitsbereich der Primärfunktion durch Nutzung optischer Filter spektral vom Arbeitsbereich der Regensensorfunktion getrennt werden. Dies wird in vorteilhafter Weise dadurch durchgeführt, indem optische Filter auf die jeweils genutzten Pixel des Bildsensors der Primärfunktion aufgebracht sind. Dann fällt auch bei Anwesenheit von Feuchtigkeit keine zweite Strahlung auf Pixel der Primärfunktion. Beispielsweise geschieht dies bei Nutzung von Infraroten Spektralbereichen für die Primärfunktion dadurch, indem ein Filter, das nur für infrarote Strahlung durchlässig ist, vor die für die Primärfunktion genutzten Teilbereich des Bildsensors aufgebracht wird und die zweite Strahlung außerhalb des infraroten Wellenlängenbereichs ist, also beispielsweise im sichtbaren Spektralbereich und/oder im ultravioletten Spektralbereich. Allgemein gelangt die erste optische Strahlung für die Realisierung der Primärfunktion über das optische Filter auf den für die Primärfunktion genutzten Teilbereich des Bildsensors, während die zweite Strahlung vor dem für die Primärfunktion genutzten Teilbereich abgeblockt wird und lediglich von dem Teil des Bildsensors erfassbar ist. Die Primärfunktion ist damit von der Regensensorfunktion und/oder von anderen Funktionen spektral getrennt.

Vorteilhaft ist ein zweites optisches Element, das die zweite optische Strahlung derart an einer inneren Oberfläche einer Scheibe des Kraftfahrzeuges, beispielsweise der Windschutzscheibe, einkoppelt, dass die zweite optische Strahlung vor dem Austritt an der inneren Oberfläche der Scheibe wenigstens einmal an der externen Oberfläche totalreflektiert wird, wenn keine Feuchtigkeit und/oder Benetzung mit Wassertropfen an der externen Oberfläche der Scheibe vorhanden ist. Bei nicht vorhandener Feuchtigkeit an der äußeren Oberfläche entsteht bei der kollimierten optischen Strahlung kein Störlicht für die Primärfunktion. Anderseits wird bei vorhandener Feuchtigkeit die optische Strahlung derart verändert, dass dieser funktionale Zusammenhang zur Erkennung der Feuchtigkeit an der äußeren Oberfläche der Scheibe verwendbar ist. Besonders vorteilhaft ist, wenn das zweite optische Element ein Einkoppelelement ist, das beispielsweise mittels optisch durchlässigen Kleber an der inneren Oberfläche einer Scheibe des Kraftfahrzeuges befestigt ist. Ferner ist die Variante vorteilhaft, wenn die zweite optische Strahlung vor dem Austritt an der inneren Oberfläche der Scheibe mehr als einmal an der externen Oberfläche reflektiert wird, da dann sowohl eine größere Messfläche abgedeckt wird, als auch ein stärkerer Intensitätseinbruch bei Anwesenheit von Feuchtigkeit und/oder Wassertropfen registriert wird.

Vorteilhaft ist, wenn die wenigstens eine Strahlungsquelle und/oder das wenigstens eine erste optische Element und/oder das wenigstens eine zweite optische Element in eine Streulichtblende der Kamera und/oder ein Gehäuse im/oder ein anderes packaging-relevantes (verpackungsrelevantes) Bauteil der Kamera integriert sind, da dies zu einer besonders kompakten Bauform der Kamera mit integrierter Regensensorfunktion führt und kein zusätzlicher Bauraum benötigt wird.

Durch eine Blende, wobei die Blende derart gestaltet ist, dass die erste optische Strahlung von dem Teil des Bildsensors abgeblockt wird, während die zweite optische Strahlung vor dem Teil des Bildsensors erfasst wird, wird in vorteilhafter Weise erreicht, dass die Genauigkeit der Regensensorfunktion und der wenigstens einen Primärfunktion der Kamera erhöht wird. Gleichzeitig wird die Zuverlässigkeit gesteigert. Besonders vorteilhaft ist dabei, wenn diese Blende in einem Lid (Abdeckung), insbesondere in einem Glaslid, des Bildsensors untergebracht ist, da die Abblockung der ersten optische Strahlung in dieser Anordnung besonders effizient bei geringer Baugröße der Blende ist. Die Blende ist wie vorstehend erläutert speziell ausgeführt und unterscheidet sich von den sonst verwendeten rotationssymmetrischen Blenden der Kamera, welche die Belichtung einstellen.

Ferner ist eine Kamera vorteilhaft, die alternativ oder zusätzlich wenigstens ein optisches Filter, insbesondere ein optisches Bandpassfilter, umfasst, das sich in einem Strahlengang der ersten und/oder der zweiten optischen Strahlung befmdet, um die Störfestigkeit zu erhöhen. Besonders vorteilhaft ist, wenn das optische Filter direkt auf einem Pixel und/oder auf dem ersten optischen Element, beispielsweise dem Auskoppelelement, angebracht ist.

Vorteilhaft ist eine Kamera, die derart gestaltet ist, dass wenigstens ein Belichtungsparameter des Bildsensors in Abhängigkeit der zweiten optischen Strahlung eingestellt wird, da dies in vorteilhafter Weise zu einer hohen Zuverlässigkeit und Genauigkeit der Regensensorfunktion beiträgt. Ferner ist vorteilhaft, wenn zusätzlich oder alternativ die Strahlungsquelle derart einstellbar ist, dass die Intensität und/oder der Zeitverlauf der zweiten optischen Strahlung veränderbar wird. Besonders vorteilhaft ist, wenn die Bilderfassung durch den Bildsensor und die zweite optische Strahlung synchronisiert sind, beispielsweise indem die zweite optische Strahlung gepulst von der Strahlungsquelle synchronisiert mit der Bilderfassung des Bildsensors abgegeben wird.

Eine Kamera, die alternativ oder zusätzlich Mittel aufweist, die eine Bestimmung der Helligkeit der Umgebung des Kraftfahrzeuges in Abhängigkeit eines zweiten Teils des Bildsensors, der von dem ersten Teil verschieden ist, und/oder eine Bestimmung der Feuchtigkeit und/oder der Benetzung mit Wassertropfen einer internen Oberfläche der Scheibe des Kraftfahrzeuges ermöglichen, hat den Vorteil, dass neben der Regensensorfunktion auch eine Lichtsensorfunktion und/oder eine Beschlagsensorfunktion durch die Kamera abgedeckt werden. Dies hat aus Kosten- und Bauraumgründen Vorteile, da keine separaten Licht-Regen-Sensormodule erforderlich sind.

Weitere Vorteile ergeben sich aus der nachfolgenden Beschreibung von Ausführungsbeispielen mit Bezug auf die Figuren und aus den abhängigen Patentansprüchen.

### Zeichnung

Die Erfindung wird nachstehend anhand der in der Zeichnung dargestellten Ausführungsformen näher erläutert.

Es zeigen:
- Figur 1 eine Übersichtszeichnung einer Kamera des ersten Ausführungsbeispiels,
- Figur 2 eine Detailansicht der Übersichtszeichnung,
- Figur 3 eine Übersichtszeichnung des zweiten Ausführungsbeispiels,
- Figur 4 eine Übersichtszeichnung des dritten Ausführungsbeispiels,
- Figur 5 ein Blockdiagramm.

### Beschreibung von Ausführungsbeispielen

Nachfolgend wird eine Kamera in einem Kraftfahrzeug mit einem Bildsensor beschrieben, wobei die Kamera Primärfunktionen, wie Nachtsichtunterstützung und/oder Spurverlassenswarnung und/oder Verkehrszeichenerkennung und/oder Rückfahrhilfe, durch Erfassung der optischen Strahlung des Verkehrsraumes der Umgebung des Kraftfahrzeuges und eine Regensensorfunktion zur Verfügung stellt.

Die nachfolgend beschriebene Kamera in einem Kraftfahrzeug der ersten beiden Ausführungsbeispiele mit einem Bildsensor mit integrierter aktiver Regensensorfunktion, nutzt eine Totalreflexion von Licht an der Scheibenaußenseite bei Abwesenheit von Regentropfen aus. Zur Realisierung der aktiven Regensensorfunktion wird wenigstens eine aktive Strahlungsquelle benutzt, die im sichtbaren und/oder nahen Infrarot-Spektralbereich arbeitet. Die Wellenlänge wird unter anderem von der spektralen Charakteristik des verwendeten Bildsensors (Imagers) und der Durchlässigkeit der Windschutzscheibe für bestimmte Wellenlängen bestimmt. Als Detektoren kommen kleinere Pixelbereiche (kleiner als ca. 10% der Bildsensorfläche) des Bildsensors am Rande der nutzbaren Pixelmatrix zum Einsatz. Als Bildsensoren werden CCD-Bildsensoren und/oder CMOS-Bildsensoren verwendet. Ein großer (vorzugsweise größer als ca. 90% der Bildsensorfläche) zusammenhängender Pixelbereich des Bildsensors wird weiterhin für wenigstens eine Primärfunktion, wie Nachtsichtunterstützung und/oder Spurverlassenwarnung und/oder Verkehrszeichenerkennung und/oder Rückfahrhilfe, benutzt. Die Kamera (Videosensor) ist über ihr Objektiv auf die Ferne fokussiert. Die Sensierung der Oberfläche der Windschutzscheibe erfolgt mittels kollimiertem Licht. Hierzu wird das Licht einer Light-Emitting-Diode (LED) und/oder eines Lasers und/oder einer anderen Strahlenquelle mit einer Strahlformungsoptik kollimiert, so dass alle Lichtstrahlen näherungsweise parallel, d.h. mit geringer Strahldivergenz, in eine Richtung laufen. Dieser kollimierte Lichtstrahl als optische Strahlung wird mittels eines optischen Koppelelements so in die Scheibe eingekoppelt, dass er unter einem Winkel größer dem Grenzwinkel der Totalreflexion auf die Oberfläche der Scheibe (Grenzfläche Scheibe-Luft) auftrifft. Je nach Ausführungsform wird nach ein oder mehrmaliger Totalreflexion an der Oberfläche der Scheibe der kollimierte Lichtstrahl über ein Auskoppelelement aus der Scheibe ausgekoppelt und freistrahlend über das Objektiv dem Bildsensor zugeführt. Durch den Einsatz eines kollimierten Lichtstrahls ist eine Sensierung auch außerhalb des Schärfentiefenbereichs der Kamera möglich, da die Strahlungsquelle aufgrund der Kollimationsoptik im Unendlichen erscheint. Die gegenüber einer herkömmlichen Kamera ohne Regensensorfunktionalität zusätzlichen Bauteile, wie die Strahlungsquelle mit Kollimator und/oder Koppelelemente, werden bevorzugt in den Bauraum des Videosensors, beispielsweise im Gehäuse und/oder der Streulichtblende und/oder Abdeckungen der Kamera, integriert. Spannungsversorgung und Ansteuerung der Strahlungsquelle erfolgen über die Kamera. Kommunikation mit dem Kraftfahrzeug erfolgt über die Kommunikations-Schnittstelle der Kamera, beispielsweise mit einem Automobilbus, wie dem CAN.

Im dritten Ausführungsbeispiel ist eine Kamera beschrieben, die Regentropfen rein passiv durch Beobachtung der Außenseite der Scheibe eines Kraftfahrzeuges mit einem Teil eines Bildsensors erkennt und damit eine passive Regensensorfunktion realisiert.

Die Nachtsichtunterstützungsfunktion ist eine Fahrerassistenzfunktion, bei der Informationen aus der Umgebung des Kraftfahrzeuges, welche der Fahrer beispielsweise aufgrund von Dunkelheit oder Nebel nicht direkt wahrnehmen kann, bildgebend und/oder warnend dem Fahrer über eine Anzeigeeinheit, beispielsweise einem Display oder einem Head-up-Display, angezeigt werden. Eine Funktion zur Spurverlassenwarnung gibt eine optische und/oder haptische und/oder akustische Warnung, falls das Kraftfahrzeug die Fahrspur verlässt. Ein System zur Verkehrszeichenerkennung unterstützt den Fahrer bei der Erkennung von Verkehrszeichen. Bei der Rückfahrhilfe handelt es sich um eine Fahrerassistenzfunktion, die dem Fahrer den rückwärtigen Fahrraum zur Anzeige bringt.

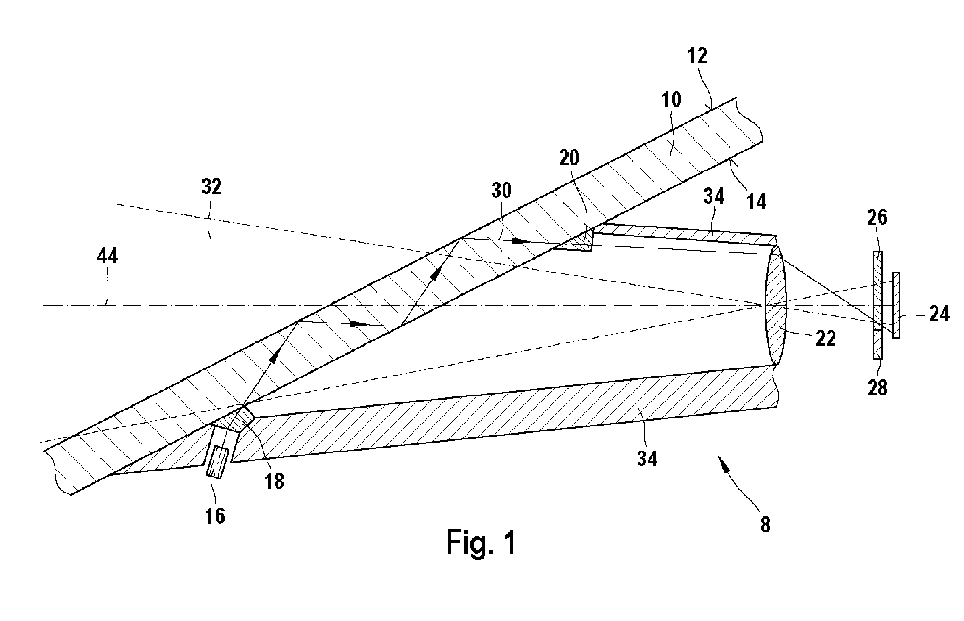

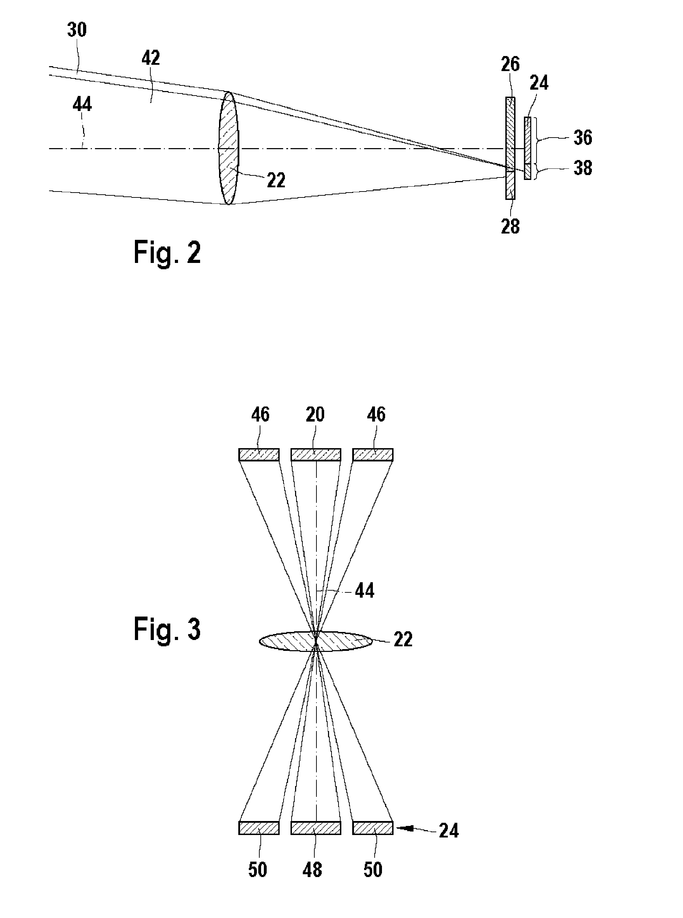

Figur 1 zeigt eine Übersichtszeichnung einer Kamera 8 des ersten Ausführungsbeispiels zur Realisierung einer aktiven Regensensorfunktion, bestehend aus einer Strahlungsquelle, einem ersten optischen Element, einem zweiten optischen Element und einem Bildsensor 24. Im ersten Ausführungsbeispiel ist die Strahlungsquelle eine LED 16. Das Licht 30 der LED 16 als zweite optische Strahlung wird durch einen in Figur 1 nicht eingezeichneten Kollimator an der Austrittsfläche der Strahlung aus der LED 16 kollimiert und über ein Einkoppelelement 18 als zweites optisches Element in die Scheibe eingekoppelt, wobei die Scheibe im ersten Ausführungsbeispiel die Windschutzscheibe 10 eines Kraftfahrzeuges ist. Nach dreimaliger Totalreflexion an der Scheibenoberflächen 12, 14 - zweimal an der äußeren Oberfläche 12 und einmal an der inneren Oberfläche 14 - erfolgt eine Auskopplung über ein Auskoppelelement 20 als erstes optisches Element. Das noch immer kollimierte Licht 30 (Strahlbündel) der so integrierten Regensensorfunktion wird dann frei über das Objektiv 22 auf Pixel einer der untersten Zeilen des Bildsensors 24 (Imager) abgebildet. Das Objektiv 22 besteht aus wenigstens einer Linse. Im ersten Ausführungsbeispiel ist die Kamera 8 an der Windschutzscheibe 10 befestigt und der Erfassungsbereich 32 des Bildsensors 24 in Fahrtrichtung des Kraftfahrzeuges ausgerichtet. Der Bildsensor 24 erfasst Licht des Erfassungsbereiches 32 als erste optische Strahlung. In einer Variante des ersten Ausführungsbeispiels ist die Kamera 8 an einer anderen Scheibe des Kraftfahrzeuges, beispielsweise an der rückwärtigen Scheibe zur Realisierung einer Rückfahrkamera die den rückwärtigen Raum aufnimmt, angeordnet. Als Bildsensor 24 wird im bevorzugten Ausführungsbeispiel ein CMOS-Bildsensor verwendet. Alternativ oder zusätzlich sind CCD-Bildsensoren und/oder andere gleichwertige Bildsensoren einsetzbar. Im ersten Ausführungsbeispiel sind die LED 16 als Strahlungsquelle, das Einkoppelelement 18 als zweites optisches Element und das Auskoppelelement als erstes optisches Element 20 in den Streulichtblenden 34 der Kamera 8 integriert. Die Streulichtblende 34 ist ein Teil des Gehäuses der Kamera 8 und dient dazu, einfallendes Licht (Streulicht) der Umgebung abzuschirmen. Ferner umfasst die Kamera 8 eine spezielle Blende 28, die in dem Glaslid 26 als Abdeckung des Bildsensors 24 integriert ist. Die Funktion der Blende 28 wird in Figur 2 näher erläutert. Bei direktem Auskoppeln des kollimierten Lichts 30 in Richtung des Objektivs 22 der Kamera 8 ohne Richtungsumlenkung ist die Einbauposition der Kamera 8 zur Scheibe zu beachten: Die optische Achse 44 der Kamera 8 ist im bevorzugten Ausführungsbeispiel etwa horizontal eingebaut, während die Windschutzscheibe 10 eine Neigung gegenüber der Horizontalen von etwa 25° bis 32° aufweist. Bei einer Brechzahl der Scheibe von etwa 1.52 und einer Brechzahl von Wasser von etwa 1.33 findet ab einem Winkel von 61° stets Totalreflexion statt, so dass dann keine Unterscheidung mehr möglich wird, ob Wasser auf der Scheibe vorhanden ist. Der gewählte Einkoppelwinkel liegt also zwischen etwa 41° (Grenzwinkel Totalreflexion Glas-Luft) und 61° (Grenzwinkel der Totalreflexion Glas-Wasser). Nun ist zu beachten, dass das aus der Scheibe ausgekoppelte Licht 30 noch auf ein Randpixel des Bildsensors 24 treffen muss. Bei den beschriebenen Verhältnissen werden daher im bevorzugten Ausführungsbeispiel Pixel aus dem mittleren Bereich der untersten Zeilen des Bildsensors 24 herangezogen.

Figur 2 zeigt eine Detailansicht der Übersichtszeichnung der Kamera des ersten Ausführungsbeispiels nach Figur 1. Anhand Figur 2 wird nachfolgend erläutert, wie Störlicht aus der selben Richtung wie das eigentliche Nutzsignal der Regensensorfunktion ausgeblendet wird. Da parallele Strahlen aus einer Richtung auf einen Punkt der Brennebene fokussiert werden, in der sich der Bildsensor 24 näherungsweise befindet, trifft bei Abwesenheit der Blende 28 auf den für die Regensensorfunktion reservierten Pixelbereich 38 nicht nur das aus der Scheibe ausgekoppelte Licht 30 als zweite optische Strahlung des Regensensors, sondern auch Störlicht 42 als erste optische Strahlung aus dem Fahrzeugvorfeld, das dieselbe Richtung aufweist. Neben dem für die Regensensorfunktion reservierten Pixelbereich 38 umfasst der Bildsensor 24 einen Pixelbereich 36 zur Realisierung wenigstens einer Primärfunktion. Um eine Überlagerung dieses Störlichtes 42 mit dem Licht 30 der Regensensorfunktion zu verhindern, wird im ersten Ausführungsbeispiel das Störlicht 44 mittels einer mechanischen Blende 28 ausgeblendet. Die Richtung des kollimierten Lichts 30 (Strahl) der Regensensorfunktion wird so gewählt, dass sein Einfallswinkel gerade etwa dem maximalen Öffnungswinkel der Kamera entspricht und er auf eine der untersten Zeilen (des für die Regensensorfunktion reservierten Pixelbereichs 38) des Bildsensors 24 fällt. Der Durchtrittsort durch das Objektiv 22 wird so weit oben wie möglich gewählt, jedoch beschränkt durch eine nicht eingezeichnete feldbegrenzende Blende. Parallel zu diesem als Nutzstrahl verwendeten Licht 30 der Regensensorfunktion wird aus dem Vorfeldbereich des Fahrzeugs einfallendes Störlicht 42 durch eine mechanische Blende 28 unmittelbar vor den genutzten Pixeln des für die Regensensorfunktion genutzten Pixelbereiches 38 abgeblockt. Der gewählte Durchtrittsort des Lichtes 30 am oberen Rand des Objektivs 22 ist besonders vorteilhaft, da keine zusätzliche weitere Blende zur Abschirmung weiterer Strahlen oberhalb des Regensensorbündels benötigt wird. Ferner zeigt Figur 2 die optische Achse 44 der Kamera. Zur technischen Realisierung der Blende 28 werden verschiedene Varianten verwendet. Es ist bekannt, Bildsensoren 24 zum Schutz der Bonddrähte mit einem Glaslid 26 als Abdeckung auszustatten, wobei das Glaslid 26 vorzugsweise unmittelbar auf den Bildsensor 24 aufgeklebt wird. In einer ersten Variante wird dieses Glaslid 26 mit einer lichtundurchlässigen Schicht auf der Oberseite und/oder der Unterseite je nach benötigter Position der Blende 28 teilbeschichtet. Alternativ oder zusätzlich wird das Glaslid 26 aus zwei übereinanderliegenden Teilplättchen zusammengesetzt, so dass auch die Blendenschicht alternativ oder zusätzlich an Positionen zwischen Ober- und Unterseite des Glaslids 26 aufgebracht werden kann. Alternativ oder zusätzlich weist der Bildsensor 24 eine Beschichtung auf, wobei die Beschichtung beispielsweise ein winkelabhängiges Filter ist, das derart gestaltet ist, dass Störlicht 42 (Licht aus der Störrichtung) unterdrückt und Licht 30 der Nutzrichtung durchlässt. In einer Variante des ersten Ausführungsbeispiels wird Störlicht 42 alternativ oder zusätzlich rechnerisch berücksichtigt. Hierzu werden zwei Bilder unmittelbar hintereinander aufgenommen, wobei ein Bild mit eingeschalteter Strahlungsquelle aufgenommen wird, das andere ohne. Der Einfluss des Störlichts 42 wird dann rechnerisch separiert. Das Störlicht 42 wird dabei als quasistationär betrachtet. Diese Näherung ist bei den meisten natürlichen Szenen zulässig.

Figur 3 zeigt eine Übersichtszeichnung mit Blickrichtung von oben auf die Kamera des zweiten Ausführungsbeispiels, wobei nur die gegenüber dem ersten Ausführungsbeispiel geänderten Maßnahmen aufgeführt und nachfolgend beschrieben sind. Ferner werden für die entsprechenden Elemente des zweiten gegenüber dem ersten Ausführungsbeispiels die selben Bezugszeichen verwendet. Im zweiten Ausführungsbeispiel ist neben der Regensensorfunktion auch eine Lichtsensorfunktion in der Kamera integriert. Unter einer Lichtsensorfunktion in Kraftfahrzeugen wird hierbei das automatische Einschalten und/oder Ausschalten der Kraftfahrzeugbeleuchtung, beispielsweise des Abblendlichtes und/oder des Fernlichtes und/oder der Nebelscheinwerfer und/oder der Nebelrückleuchte und/oder des Innenraumlichtes und/oder der Armaturenbeleuchtung und/oder ähnliches verstanden. Zur Bestimmung der Helligkeit der Umgebung des Kraftfahrzeuges wird neben dem Licht aus dem Erfassungsbereiches der Kamera (Licht aus der ersten Richtung) Licht aus wenigstens einer zweiten Richtung verwendet. Das Licht aus der zweiten Richtung stammt vorzugsweise aus einem Bereich oberhalb des Kraftfahrzeuges. Hierzu wird ein Mittel zur Umlenkung von Licht aus der wenigstens einen zweiten Richtung auf einen zweiten Teil des Bildsensors 24 verwendet. Das Mittel zur Umlenkung von Licht sind in diesem zweiten Ausführungsbeispiel zwei Spiegel 46.

Das Licht aus der zweiten Richtung wird durch die Spiegel 46 über das Objektiv 22 auf zwei Pixelbereiche 50 für die Lichtsensorfunktion abgebildet, während das Licht für die Regensensorfunktion durch das Auskoppelelement 20 über das Objektiv 22 auf einen Pixelbereich 48 für die Regensensorfunktion abgebildet wird. Die Pixelbereiche 48, 50 der Lichtsensorfunktion und der Regensensorfunktion nutzen die gleichen Zeilen des Bildsensors 24. Die genutzten Zeilen werden beispielsweise in 3 Pixelbereiche 48, 50 unterteilt. Der mittlere Pixelbereich 48 dient als Regensensor, die äußeren beiden Pixelbereiche 50 als Lichtsensoren. Ebenso wie beim ersten Ausführungsbeispiel mit lediglich der Regensensorfunktion ist eine Blockung durch eine mechanische Blende unmittelbar vor den Pixeln vorzusehen, um Störlicht aus derselben Richtung abzublocken.

Die Störfestigkeit wird in einer Variante der vorstehend beschriebenen Ausführungsbeispiele durch Abstimmung der Wellenlänge der Strahlungsquelle mit dem Bildsensor durchgeführt. Die Detektoren (Pixel der Regensensorfunktionalität) werden durch optische Bandpassfilter, beispielsweise Interferenzfilter, auf die Wellenlänge der Strahlungsquelle angepasst. Hierzu wird in einer Variante eine Interferenzfilterschicht direkt auf wenigstens einen Pixel des Bildsensors aufgebracht und/oder in einer zweiten Variante an einer anderer günstiger Stelle im Strahlengang, angebracht.

Alternativ oder zusätzlich wird die Störfestigkeit durch zeitliche Synchronisierung zwischen Strahlungsquelle und Bildsensor erhöht. Zur Unterdrückung von Umgebungslichteinflüssen wird die Strahlungsquelle zu den Belichtungsphasen des Bildsensors synchron gepulst. So wird ein höherer Störabstand erzielt. In einer Variante werden abwechselnd Bilder mit ein- und ausgeschalteter Strahlungsquelle aufgenommen werden, so dass der Umgebungslichtanteil, der bei ausgeschalteter Strahlungsquelle bestimmt wird, rechnerisch berücksichtigt wird. In einer weiteren Variante wird alternativ oder zusätzlich ein divergierender Strahlengang vor der Erfassung durch den Bildsensor erneut kollimiert. Dies wird beispielsweise durch eine Linse und/oder einen Hohlspiegel vorgenommen. In einer weiteren Variante wird Licht mit größerer Strahldivergenz verwendet, um größere Bereiche der Scheibe abzudecken.

Bei der Einkopplung des Lichtstrahls werden in weiteren Varianten neben der direkten Einkopplung des kollimierten Strahls über das Einkoppelelement zusätzliche optische Elemente, wie Umlenkspiegel, und/oder lichtführende Elemente, wie Lichtleiter, eingesetzt. Dies hat aus Bauraumgründen Vorteile, da der Einbauort der Strahlungsquelle frei wählbar ist. Entsprechendes gilt für die Auskopplung des Lichtstrahles aus der Scheibe in Richtung der Kamera. Hierzu werden zusätzliche optische Elemente, wie Umlenkspiegel, und/oder lichtführende Elemente, wie Lichtleiter, verwendet. In einer weiteren Variante wird das ausgekoppelte Licht der Regensensorfunktion unter Umgehung des Objektivs direkt auf die gewählten Pixel des Bildsensors eingekoppelt.

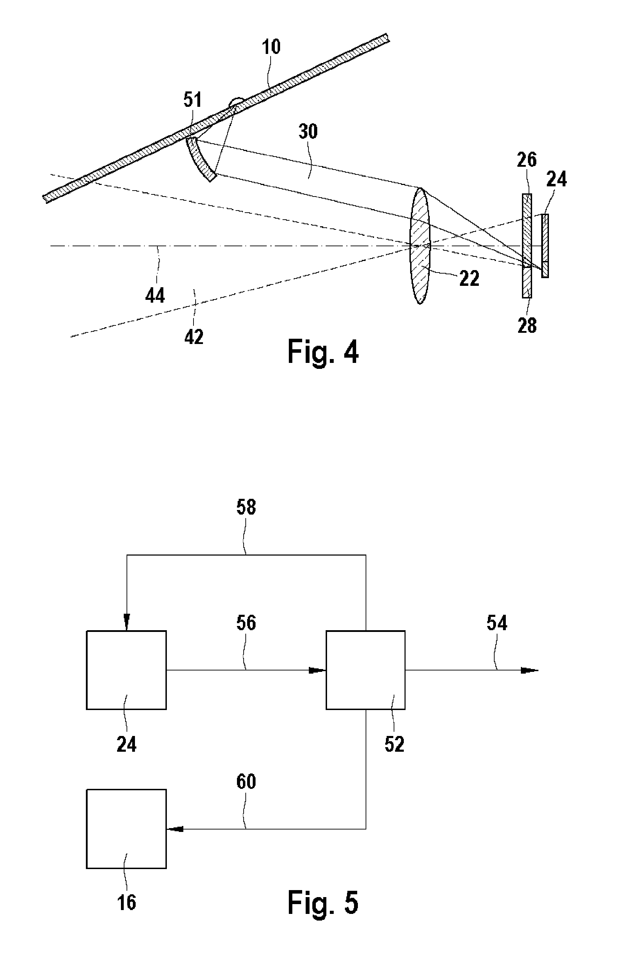

Figur 4 zeigt eine Übersichtszeichnung des dritten, zum Stand der Technik gehörendes Ausführungsbeispiels zur Realisierung einer passiven Regensensorfunktion, bestehend aus einem Parabolspiegel 51 als erstes optisches Element und einem Bildsensor 24, wobei nur die gegenüber den ersten beiden Ausführungsbeispielen geänderten Maßnahmen aufgeführt und nachfolgend beschrieben sind. Ferner werden für die entsprechenden Elemente des dritten gegenüber den ersten beiden Ausführungsbeispielen die selben Bezugszeichen verwendet. In diesem dritten Ausführungsbeispiel wird die Feuchtigkeit und/oder die Benetzung mit Regentropfen auf der Windschutzscheibe 10 rein passiv erkannt. Die Außenseite der Windschutzscheibe 10 wird mit einem matrixförmigen Bildsensor 24 erfasst, wobei die Kamera auf unendlich fokussiert ist und ebenfalls eine Fahrerassistenzfunktion als Primärfunktion, wie die Nachtsichtunterstützungsfunktion und/oder die Spurverlassensfunktion, bereitstellt. Der Fokussierungs-Konflikt liegt wie in den beiden ersten Ausführungsbeispielen darin, dass die Primärfunktion eine Fokussierung auf Unendlich benötigt, während für die Regensensorfunktion eine Fokussierung auf wenige cm notwendig ist. Im dritten Ausführungsbeispiel wird ein Parabolspiegel 51 verwendet, wobei das von einem Objekt, beispielsweise einem Regentropfen, divergent ausgehenden Licht 30 vom Parabolspiegel 51 so gebündelt wird, dass das Licht 30 danach parallel läuft und so über das Objektiv 22 scharf auf einem Teil des Bildsensors 24 der Kamera abgebildet werden. Der Parabolspiegel 51 ist derart gestaltet und ausgerichtet, dass seine Schärfeebene auf der Außenseite der Windschutzscheibe 10 liegt. Ferner führt der Parabolspiegel 51 gleichzeitig eine Umlenkung des Strahlengangs des Lichts 30 durch. Für die Regensensorfunktion wird ebenfalls ein Teil des Bildsensors 24, vorzugsweise ein Randbereich, benutzt. Im dritten Ausführungsbeispiel werden ebenfalls die unteren Zeilen des Bildsensors 24 für die Regensensorfunktion genutzt. Die Blende 28, die unmittelbar vor dem Bildsensor 24 angebracht ist, blockt parallel zum Nutzsignal des Regensensors einfallendes Störlicht 42 ab, wobei die Blende 28 auf einem Glaslid 26 angebracht ist. Der Messbereich für die Regensensorfunktion ist ein angenähert rechteckiger Bereich auf der Windschutzscheibe 10. Ferner zeigt Figur 4 die optische Achse 44 der Kamera. In einer Variante des dritten Ausführungsbeispiels wird alternativ oder zusätzlich zur Umlenkung und Kollimierung ein Hohlspiegel, der von der Paraboloidform abweicht, und/oder eine Kombination aus wenigstens einem Planspiegel und wenigstens einer Linse verwendet.

Figur 5 zeigt ein Blockdiagramm der vorstehenden beschriebenen Ausführungsbeispiele, bestehend aus einer LED 16 als Strahlungsquelle, dem Bildsensor 24 und einer Auswerteeinheit 52. Der Bildsensor 24 überträgt über eine Signalleitung 56 Bildsignale zu der Auswerteeinheit 52. Die Auswerteeinheit 52 stellt über die Signalleitung 58 wenigstens einen Parameter des Bildsensors 24 ein. Ferner stellt die Auswerteeinheit 52 über die Signalleitung 60 die LED 16 ein. Die Auswerteeinheit 52 wertet die Bildsignale des Bildsensors 24 aus und stellt über die Signalleitung 54 Primärfunktionen und/oder die Regensensorfunktion und/oder die Lichtsensorfunktion und/oder weitere Funktionen nachfolgenden Systemen zur Verfügung. Die Übertragung auf den Signalleitungen 54, 56, 58, 60 erfolgt elektrisch und/oder optisch und/oder per Funk, vorzugsweise über einen Kraftfahrzeugkommunikationsbus, wie dem CAN-Bus. Alternativ oder zusätzlich erfolgt die Übertragung auf den Signalleitungen 54, 56, 58 ,60 mittels parallelen LVDS-Leitungen (Low Voltage Differential Signaling -Leitungen) und/oder Firewire und/oder USB mit vorzugsweise Bandbreiten über 10Mbyte/s. Als Firewire oder i.LINK bezeichnet man die IEEE 1394-Technologie. Die Firewire-Schnittstelle ermöglicht die Übertragung digitaler Daten mit 400 Mbit/s oder vorzugsweise noch höheren Datenraten. Der Universal Serial Bus (USB) ist ein schnelles Bussystem, durch das mehrere Endgeräte an einem Anschluss angeschlossen werden können. Die Auswerteeinheit 52 ist derart gestaltet, dass sie die Feuchte und/oder die Benetzung mit Wassertropfen einer externen Oberfläche ermittelt. Zur Ableitung der Wischstrategie werden verschiedene Intensitäts-Schwellwerte festgelegt. Die Bereiche zwischen diesen Schwellwerten korrespondieren mit den verschiedenen Wischmodi des Scheibenwischers, wie Intervall, normaler Wischbetrieb und/oder schneller Wischbetrieb. Der aktuelle Intensitätswert wird in Abhängigkeit des Teils des Bildsensors beispielsweise als Mittelwert und/oder Median aller genutzter Pixel der Regensensorfunktionalität bestimmt. Durch Vergleich mit den festlegbaren Schwellwerten wird dann die Wischstrategie bestimmt. Alternativ oder zusätzlich wird das Histogramm über alle genutzten Pixel und/oder die Histogramme bestimmter Pixelbereiche ausgewertet und über die Bildung von Perzentilen eine verfeinerte Feuchteberechnung durchgeführt. So kann auch aus der Verteilung des Histogramms auf bestimmte Feuchtigkeitsverhältnisse geschlossen werden.

Alternativ oder zusätzlich wird eine Belichtungseinstellung des Bildsensors durchgeführt. Bei Kameras, die Primärfunktionen zur Verfügung stellen, wird die Belichtungseinstellung derart durchgeführt, dass ein kontrastreiches Bild vorliegt. Zur Sicherstellung der Regensensorfunktionalität werden einzeln oder gemeinsame wenigstens eine der folgenden Maßnahmen getroffen. In einer ersten Variante wird auf die absolute Bestrahlungsstärke durch Berücksichtigung der eingestellten Belichtungsparameter zurückgerechnet. Hierbei kann allerdings der Fall auftreten, dass die Pixel der Regensensorfunktionalität ihren aktiven Arbeitsbereich verlassen haben und den Minimal- oder Maximalwert annehmen, so dass keine Rückrechnung möglich ist. Dies wird als Clipping bezeichnet. Hierfür werden in weiteren Varianten wenigstens eine der folgenden Abhilfemaßnahmen durchgeführt.
- Nachregelung der Strahlungsquelle des Regensensors, so dass wieder der aktive Bereich erreicht wird, und/oder
- Einsatz eines hochdynamischen Bildsensors, so dass der aktive Bereich nie verlassen wird, und/oder
- Nutzung separat belichteter Bilder, beispielsweise jedes 10. Bildes, für die Regensensorfunktionalität. Für diese Bilder wird die Belichtungseinstellung nur auf die Pixel der Regensensorfunktionalität angewandt, während alle anderen Bilder auf Basis der Pixel der Primärfunktion belichtet werden. Die separat belichteten Bilder können je nach Ausführung des Bildsensors auf die Pixel der Regensensorfunktionalität bzw. der Primärfunktion beschränkt werden durch Wahl eines Auswahlbereiches (Windows-of-Interest). In einer weiteren Variante werden ausgewählte, bestimmte Pixelbereiche des Bildsensors einer lokalen Belichtungseinstellung (Belichtungsregelung) unterzogen, so dass gleichzeitig die Pixel der Primärfunktion und/oder der Regensensorfunktion und/oder der Lichtsensorfunktion kontrastreich belichtet werden.

Die Pixel der Regensensorfunktion werden in einer ersten Variante direkt ausgewertet und/oder es werden in einer zweiten Variante Histogramme bestimmter Pixelbereiche gebildet. Ergänzend wird in einer weiteren Variante die Auswertestrategie abhängig von anderen Informationen, wie Navigationssignalen und/oder Wetterdaten, angepasst.

In einer weiteren Variante ist ein Beschlagsensor in der Kamera integriert, der den Beschlag auf der Innenseite der Windschutzscheibe detektiert. Hierbei werden ebenfalls Teilbereiche des Bildsensors, der zur Bereitstellung einer Primärfunktion dient, ausgenutzt. Ausgehend von Figur 3 wird auf einen der beiden Pixelbereiche, die in Figur 3 mit Bezugszeichen 50 bezeichnet sind, ein Polarisationsfilter aufgebracht. Dieser Pixelbereich wird als Beschlagsensor genutzt, während der zweite Pixelbereich als Regensensor erhalten bleibt. Bei der geometrischen Auslegung des Beschlagsensors ist berücksichtigt, dass sich der Strahlverlauf durch die Reflexion an der Scheibeninnenseite gegenüber dem Regensensor ändert. Kleine Beschlagspartikel wirken im Gegensatz zu den größeren Regentropfen polarisierend, so dass nach der Reflexion an einer beschlagenen Oberfläche linear polarisiertes Licht entsteht. Licht, das den Polarisationsfilter überwindet, basiert daher überwiegend auf Reflexion am Beschlag an der Scheibeninnenseite. Zusammen mit dem unterschiedlichen Reflexionsort (Scheibeninnenseite statt Scheibenaußenseite) liegen zwei Mechanismen zur Unterscheidung zwischen Regen und Beschlag vor. Die Auswertung der Pixelbereiche des Beschlagsensors erfolgt analog zu der vorstehend beschriebenen Auswertung beim Regensensor.

Alternativ oder zusätzlich wird die vorstehend beschriebene Regensensorfunktionalität zur Steuerung des Heckscheibenwischers genutzt werden. Vorzugsweise ist die Regensensorfunktionalität in der Rückfahrkamera oder in der Frontkamera integriert. Alternativ oder zusätzlich ist eine Lichtsensorfunktionalität und/oder eine Beschlagsensorfunktionalität in der Rückfahrkamera integriert.

In einer weiteren Variante der beschriebenen Ausführungsbeispiele umfasst die Kamera wenigstens zwei oder mehr als zwei Bildsensoren, wobei bei zwei Bildsensoren die Kamera in einer weiteren Variante als Stereokamera ausgeführt ist.

## Patentansprüche

1. Kamera (8) für ein Kraftfahrzeug mit wenigstens einem Bildsensor (24) und einem auf die Ferne fokussierten Objektiv (22), wobei die Kamera (8) derart gestaltet ist, dass der Bildsensor (24) über das auf die Ferne fokussierte Objektiv (22) erste optische Strahlung (32) des Verkehrsraumes der Umgebung des Kraftfahrzeuges erfasst, wobei die Kamera (8) derart gestaltet ist, dass von der ersten optischen Strahlung (32) verschiedene, im wesentliche parallele zweite optische Strahlung (30) über das auf die Ferne fokussierte Objektiv (22) einem Teil des Bildsensors (24) zugeführt, auf dem Teil des Bildsensors (24) scharf abgebildet und von dem Teil des Bildsensors (24) erfasst wird, wobei in Abhängigkeit der erfassten zweiten optischen Strahlung (30) die Feuchtigkeit und/oder die Benetzung mit Wassertropfen einer externen Oberfläche einer Scheibe (10) des Kraftfahrzeuges bestimmbar ist, und die Kamera (8) wenigstens ein erstes optisches Element (20) enthält, **dadurch gekennzeichnet, dass** das erste optische Element (20) die zweite optische Strahlung (30) aus der Scheibe (10) des Kraftfahrzeugs auskoppelt.

2. Kamera nach Anspruch 1, **dadurch gekennzeichnet, dass** die Kamera (8) wenigstens eine Strahlungsquelle (16) und/oder wenigstens ein zweites optisches Element (18) und/oder wenigstens eine Linse (22) enthält.

3. Kamera nach einem der vorhergehenden Ansprüche, **dadurch gekennzeichnet, dass** das erste optische Element (20) die zweite optische Strahlung (30), vorzugsweise über eine Linse (22), dem Teil des Bildsensors (24) zuführt.

4. Kamera nach einem der vorhergehenden Ansprüche, **dadurch gekennzeichnet, dass** das erste optische Element die zweite optische Strahlung kollimiert und/oder umlenkt.

5. Kamera nach einem der auf den Anspruch 2 rückbezogenen, vorhergehenden Ansprüche, **dadurch gekennzeichnet, dass** die Strahlungsquelle (16) die zweite optische Strahlung (30) erzeugt, wobei die zweite optische Strahlung (30) kollimiert ist und/oder nach Erzeugung kollimiert wird.

6. Kamera nach einem der auf den Anspruch 2 rückbezogenen, vorhergehenden Ansprüche, **dadurch gekennzeichnet, dass** das zweite optische Element (18) die zweite optische Strahlung (30) derart an einer inneren Oberfläche der Scheibe (10) eingekoppelt, dass die zweite optische Strahlung (30) vor dem Austritt an der inneren Oberfläche der Scheibe (10) wenigstens einmal an der externen Oberfläche (12, 14) reflektiert wird.

7. Kamera nach einem der Ansprüche 2 bis 6, **dadurch gekennzeichnet, dass** die Strahlungsquelle (16) und/oder das erste optische Element (20) und/oder das zweite optische Element (18) in eine Streulichtblende (34) der Kamera und/oder ein Gehäuse der Kamera integriert sind.

8. Kamera nach einem der vorhergehenden Ansprüche, **dadurch gekennzeichnet, dass** die Kamera (8) wenigstens eine Blende umfasst, wobei die Blende derart gestaltet ist, dass die erste optische Strahlung (32) von dem Teil des Bildsensors abgeblockt wird, während die zweite optische Strahlung (30) von dem Teil des Bildsensors (24) erfasst wird.

9. Kamera nach Anspruch 8, **dadurch gekennzeichnet, dass** die Blende (34) in einer Abdeckung des Bildsensors integriert ist und/oder die Blende eine Beschichtung des Bildsensors ist.

10. Kamera nach einem der vorhergehenden Ansprüche, **dadurch gekennzeichnet, dass** die Kamera (8) wenigstens ein optisches Filter umfasst, wobei das optische Filter vorzugsweise derart gestaltet ist, dass die zweite optische Strahlung (30) nur von dem Teil des Bildsensors erfassbar ist.

11. Kamera nach einem der vorhergehenden Ansprüchen, **dadurch gekennzeichnet, dass** die Kamera (8) eine Auswerteeinheit (52) umfasst, die wenigstens eine Fahrerassistenzfunktion in Abhängigkeit der ersten optischen Strahlung (32) zur Verfügung stellt, wobei die Fahrerassistenzfunktion insbesondere eine Nachtsichtunterstützungsfunktion und/oder eine Spurverlassenswarnungsfunktion und/oder eine Verkehrszeichenerkennungsfunktion und/oder eine Rückfahrhilfefunktion ist.

12. Kamera nach einem der vorhergehenden Ansprüche, **dadurch gekennzeichnet, dass** die Kamera (8) derart gestaltet ist, dass
- wenigstens ein Belichtungsparameters des Bildsensors in Abhängigkeit der zweiten optischen Strahlung eingestellt wird und/oder
- die Intensität und/oder der Zeitverlauf der zweiten optischen Strahlung eingestellt wird und/oder
- der Bildsensor und die zweite optische Strahlung synchronisiert sind.

13. Kamera nach einem der vorhergehenden Ansprüchen, **dadurch gekennzeichnet, dass** die Kamera (8) Mittel aufweist, um eine Helligkeit in der Umgebung des Kraftfahrzeugs zu bestimmen und/oder dass die Kamera Mittel aufweist, um einen Beschlags auf einer internen Oberfläche der Scheibe zu bestimmen.

## Claims

1. Camera (8) for a motor vehicle having at least one image sensor (24) and an objective (22) focused at a distance, wherein the camera (8) is configured such that the image sensor (24) captures first optical radiation (32) of the traffic area surrounding the motor vehicle via the objective (22) that is focused at a distance, wherein the camera (8) is configured such that substantially parallel second optical radiation (30) which is different from the first optical radiation (32) is supplied, via the objective (22) that is focused at a distance, to a portion of the image sensor (24), is imaged sharply on the portion of the image sensor (24) and captured by the portion of the image sensor (24), wherein the humidity and/or the wetting of an external surface of a pane (10) of the motor vehicle with water droplets can be determined in dependence on the captured second optical radiation (30), and the camera (8) contains at least one first optical element (20), **characterized in that** the first optical element (20) couples the second optical radiation (30) out of the pane (10) of the motor vehicle.

2. Camera according to Claim 1, **characterized in that** the camera (8) contains at least one radiation source (16) and/or at least one second optical element (18) and/or at least one lens (22).

3. Camera according to one of the preceding claims, **characterized in that** the first optical element (20) supplies the second optical radiation (30) to the portion of the image sensor (24), preferably by way of a lens (22).

4. Camera according to one of the preceding claims, **characterized in that** the first optical element collimates and/or diverts the second optical radiation.

5. Camera according to one of the preceding claims which refer back to Claim 2, **characterized in that** the radiation source (16) generates the second optical radiation (30), wherein the second optical radiation (30) is collimated and/or is to be collimated after generation.

6. Camera according to one of the preceding claims which refer back to Claim 2, **characterized in that** the second optical element (18) couples the second optical radiation (30) into an internal surface of the pane (10) such that the second optical radiation (30) is reflected at least once at the external surface (12, 14) before it leaves by the internal surface of the pane (10).

7. Camera according to one of Claims 2 to 6, **characterized in that** the radiation source (16) and/or the first optical element (20) and/or the second optical element (18) are integrated in a scattered-light screen (34) of the camera and/or a housing of the camera.

8. Camera according to one of the preceding claims, **characterized in that** the camera (8) comprises at least one screen, wherein the screen is configured such that the first optical radiation (32) is blocked from the portion of the image sensor, while the second optical radiation (30) is captured by the portion of the image sensor (24).

9. Camera according to Claim 8, **characterized in that** the screen (34) is integrated in a cover of the image sensor and/or the screen is a coating on the image sensor.

10. Camera according to one of the preceding claims, **characterized in that** the camera (8) comprises at least one optical filter, wherein the optical filter is preferably configured such that the second optical radiation (30) is capturable only by the portion of the image sensor.

11. Camera according to one of the preceding claims, **characterized in that** the camera (8) comprises an evaluation unit (52) which makes available at least one driver assistance function in dependence on the first optical radiation (32), wherein the driver assistance function is in particular a night-vision support function and/or a lane-departure warning function and/or a traffic-sign recognition function and/or a reverse parking aid function.

12. Camera according to one of the preceding claims, **characterized in that** the camera (8) is configured such that
- at least one exposure parameter of the image sensor is set in dependence on the second optical radiation and/or
- the intensity and/or the time profile of the second optical radiation is set and/or
- the image sensor and the second optical radiation are synchronized.

13. Camera according to one of the preceding claims, **characterized in that** the camera (8) has means for determining the brightness in the area surrounding the motor vehicle and/or **in that** the camera has means for determining the condensation on an internal surface of the pane.

## Revendications

1. Caméra (8) destinée à un véhicule automobile comportant au moins un capteur d'image (24) et un objectif (22) focalisé à l'infini (22), dans lequel la caméra (8) est conçue de manière à ce que le capteur d'image (24) détecte, par l'intermédiaire de l'objectif (22) focalisé à l'infini, un premier rayonnement optique (32) dans l'espace public de l'environnement du véhicule automobile, dans lequel la caméra (8) est conçue de manière à ce qu'un second rayonnement optique (30) différent du premier rayonnement optique (32) et sensiblement parallèle à celui-ci soit acheminé par l'intermédiaire de l'objectif (22) focalisé à l'infini vers une partie du capteur d'image (24), à ce qu'une image nette de celui-ci soit formée sur ladite partie du capteur d'image (24) et à ce qu'elle soit détecté par ladite partie dudit capteur d'image (24), dans lequel l'humidité et/ou la mouillabilité par des gouttes d'eau d'une surface externe d'une vitre (10) du véhicule automobile puisse être déterminée en fonction du second rayonnement optique (30) détecté, et la caméra (8) comporte au moins un premier élément optique (20), **caractérisé en ce que**
le premier élément optique (20) couple le second rayonnement optique (30) en sortie de la vitre (10).

2. Caméra selon la revendication 1, **caractérisée en ce que** la caméra (8) comporte au moins une source de rayonnement (16) et/ou au moins un second élément optique (18) et/ou au moins une lentille (22).

3. Caméra selon l'une quelconque des revendications précédentes, **caractérisée en ce que** le premier élément optique (20) achemine le second rayonnement optique (30), de préférence par l'intermédiaire d'une lentille (22), vers ladite partie du capteur d'image (24).

4. Caméra selon l'une quelconque des revendications précédentes, **caractérisée en ce que** le premier élément optique collimate et/ou dévie le second rayonnement optique.

5. Caméra selon l'une quelconque des revendications précédentes lorsqu'elles dépendent de la revendication 2, **caractérisée en ce que** la source de rayonnement (16) génère le second rayonnement optique (30), dans lequel le second rayonnement optique (30) est collimaté et/ou est collimaté après avoir été généré.

6. Caméra selon l'une quelconque des revendications précédentes lorsqu'elles dépendent de la revendication 2, **caractérisée en ce que** le second élément optique (18) injecte le second rayonnement optique (30) sur une surface interne de la vitre (10) de manière à ce que le second rayonnement optique (30) soit réfléchi au moins une fois sur la surface externe (12, 14) avant sa sortie de la surface interne de la vitre (10).

7. Caméra selon l'une quelconque des revendications 2 à 6, **caractérisée en ce que** la source de rayonnement (16) et/ou le premier élément optique (20) et/ou le second rayonnement optique (18) sont intégrés à un diaphragme anti-lumière parasite (34) de la caméra et/ou d'un boîtier de la caméra.

8. Caméra selon l'une quelconque des revendications précédentes, **caractérisée en ce que** la caméra (8) comprend au moins un diaphragme, dans lequel le diaphragme est conçu de manière à ce que le premier rayonnement optique (32) soit occulté par ladite partie du capteur d'image tandis que le second rayonnement optique (30) est détecté par ladite seconde partie du capteur d'image (24).

9. Caméra selon la revendication 8, **caractérisée en ce que** le masque (34) est intégré à un capot de protection du capteur d'image et/ou **en ce que** le diaphragme est un revêtement du capteur d'image.

10. Caméra selon l'une quelconque des revendications précédentes, **caractérisée en ce que** la caméra (8) comprend au moins un filtre optique, dans lequel le filtre optique est de préférence conçu de manière à ce que le second rayonnement optique (30) ne soit détecté que par ladite partie du capteur d'image.

11. Caméra selon l'une quelconque des revendications précédentes, **caractérisée en ce que** la caméra (8) comprend une unité d'évaluation (52) qui fournit au moins une fonction d'aide à la conduite en fonction du premier rayonnement optique (32), dans lequel la fonction d'aide à la conduite est notamment une fonction d'aide à la vision nocturne et/ou une fonction d'alerte à la sortie de route et/ou une fonction de détection de panneaux routiers et/ou une fonction d'aide au recul.

12. Caméra selon l'une quelconque des revendications précédentes, **caractérisée en ce que** la caméra (8) est conçue de manière à ce que
- au moins un paramètre d'éclairement du capteur d'image soit réglé en fonction du second rayonnement optique et/ou
- l'intensité et/ou l'évolution temporelle du second rayonnement optique soit réglée et/ou
- le capteur d'image et le second rayonnement optique soient synchronisés.

13. Caméra selon l'une quelconque des revendications précédentes, **caractérisée en ce que** la caméra (8) comporte des moyens destinés à déterminer la luminosité dans l'environnement du véhicule automobile et/ou **en ce que** la caméra comporte des moyens destinés à déterminer la présence de buée sur une surface interne de la vitre.
